# EUROPEAN PATENT APPLICATION

(11) **EP 3 530 092 A1**
(43) Date of publication of application: **28.08.2019**
(21) Application number: 17863049.7
(22) Date of filing: 09.03.2017
(51) Int. Cl.: A01C 7/08, A01C 5/06, A01B 63/06

(54) **DIRECT SEEDING DEVICE FOR DRY PADDY FIELD**

(30) Priority: 19.10.2016 KR 20160135775
(71) Applicant: Bulls Co.,Ltd, Goryeong-gun, Gyeongsangbuk-do 40113 (KR)
(72) Inventor: PARK, Gwang Ho, Jeonju-si, Jeollabuk-do 54866 (KR); KIM, Moon Taek, Dalseong-gun Daegu 42960 (KR)
(74) Representative: Appleyard Lees IP LLP
(86) International application number: PCT/KR2017/002560
(87) International publication number: WO 2018/074680

(57) **Abstract**

The present invention relates to a direct seeding device for a dry paddy field which accurately and efficiently performs a direct seeding process on the dry paddy field of leveling the soil of the dry paddy field, spreading sheets of mulching paper for direct seeding, covering the sheet of mulching paper with soil to be fixed, cutting the sheet of mulching paper, and fixing the sheet of mulching paper to the ground, the direct seeding device for a dry paddy field comprising: a main frame forming a tractor connection portion and having a gear box for receiving power from a tractor; a rotavator part for cultivating soil using a rotor and scattering the soil rearward; a land leveler for leveling the ground evenly while pressing and compacting with a leveling roller ; a spreading part for spreading a mulching roll A on the ground using a mulching roller by supporting and unwinding both ends of the mulching roll A and indicating the height of the ground to be spread; a roll release prevention part for preventing the mulching roll from unwinding arbitrarily; a soil covering part for collecting and transporting the scattered soil from the rotavator part and scattering the soil on top of the sheet of mulching paper spread on the ground; a mulching paper cutting part for cutting the sheet of mulching paper in the width direction and lifting the sheet of mulching paper from the ground to be fixed; and a mulching paper laying part for laying the end of the mulching paper on the ground and covering the end of the mulching paper with the soil to be fixed.

## Description

### Technical Field

The present disclosure relates to a direct seeding device for a dry paddy field. More particularly, the present disclosure relates to a direct seeding device for a dry paddy field, in which the direct seeding device is configured to be capable of correctly and efficiently performing direct seeding process in a dry paddy field, which includes leveling the dry paddy field, spreading a direct seeding mulching paper, covering the mulching paper with soil so as to fix the mulching paper, cutting the mulching paper, and then fixing the mulching paper to the ground again.

### Background Art

Rice cultivation to produce rice, which is the staple crop of Korean people, has a long history since rice was already used as food in the Three Han States period in Korea, and at present, rice is the main food of the Korean people. Thus, the cultivation area and the production amount of rice are much larger than those of other crops, and rice cultivation has developed into the most important agricultural form.

Rice cultivation is largely divided into paddy rice cultivation and upland rice cultivation. Most of rice cultivation is paddy rice cultivation, and upland rice cultivation is extremely rare because paddy rice cultivation in which rice is cultivated in a paddy supplied with water to cultivate rice is advantageous in many aspects.

Paddy rice cultivation is also classified into seedling transplanting cultivation in which seedlings are raised in a rice seed plot and then transplanted to a rice paddy, wet direct seeding cultivation in which a paddy is leveled and irrigated and then seeds are directly scattered, and dry direct seeding cultivation in which a paddy is leveled in a dry-field state, then seeds are scattered, and the paddy is irrigated after the rice grows to some extent. In Korea, seedling transplanting cultivation is mainly performed, and wet direct seeding cultivation is performed on a small scale.

In recent years, as trade agreements between countries have become more active due to globalization, Korea is obliged to import a predetermined amount of rice each year as imports of various agricultural products including rice are opened. Rice consumption is also sharply reduced due to the rapid industrialization and modernization of food. As a result, there is a great need for rice cultivation to improve improvement of marketability through environmentally friendly cultivation and to improve international competitiveness through the reduction of production costs such as labor saving.

However, in seedling transplanting cultivation, which has been commonly used in Korea, labor costs are gradually increasing due to a difficulty in water management or the like, and material costs are also gradually increasing due to use of a rice nursery. Therefore, it is difficult to cope with the improvement of international competitiveness of the rice industry. Recently, in order to secure competitiveness in rice production, studies on dry direct seeding, which is advantageous in reducing labor costs and production costs, have been actively conducted.

In the dry direct seeding, because a dry rice field is plowed and leveled and rice seeds are directly sown, a mechanical work is conveniently performed, so that it is possible to reduce labor. Furthermore, it is easy to check the working condition, and it is possible to sow seeds even if water is insufficient at the time of sowing so that it is easy to match the timing of cultivation. Therefore, the farmers who grow rice through dry direct seeding are gradually increasing, and thus various kinds of dry direct seeding devices for a dry paddy field have been developed. Representative conventional techniques will be described below.

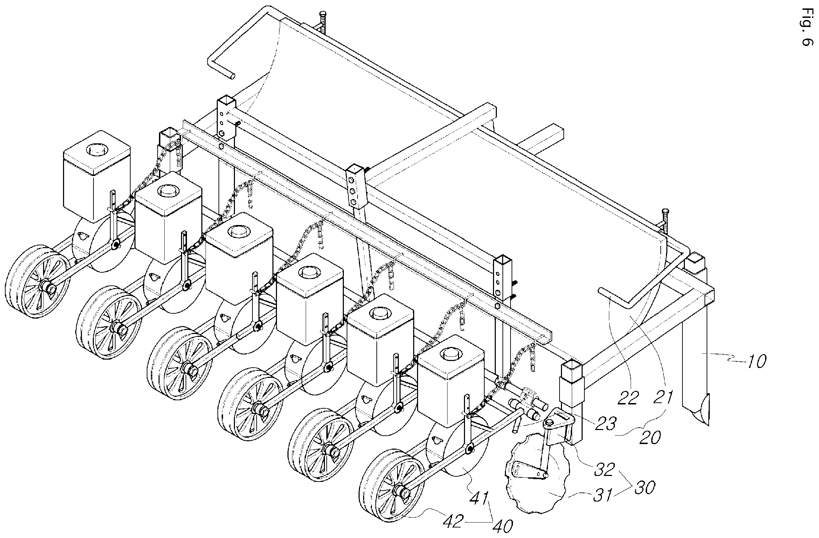

Korean Patent No. 10-0894564 describes a device for direct spreading and for spreading a coating material for direct rice seeding, as illustrated in FIG. 6. The apparatus is configured such that an excavation unit 10 having excavation means formed in a "A" shaped cross section and provided at the lower portions of the front opposite ends can dig out the ground by the width of a coating material 1 in the progressive direction of a farm machine, and the wound coating material 1 installed at the rear upper side of the excavation unit 10 through fasteners 21 can be spread over the ground in the progressive direction. The apparatus includes: a spreading part 20 including a guide plate 22 installed on the outer peripheral portion of the coating material 1 in a quadrant circular arc to guide the coating material 1 when the coating material is unwound, and a guide rod 23 installed at a lower portion spaced apart from the guide plate and configured to press the coating material 1 such that the coating material is evenly spread; a soil covering part 30 installed at the opposite sides of the rear side lower end of the spreading part 20 and configured to cover the ground excavated by the excavation unit 10 with soil through wheels 31 along the progressive direction; and a direct seeding part 40 including direct seeding machine 41 installed at the rear side of the soil covering unit so as to simultaneously perform punching and direct seeding on the upper surface of the coating material 1 along the progressive direction and compacting rollers 42.

In addition, as illustrated in FIG. 7, Korean Patent No. 10-1254020 describes an agricultural direct seeding device including: driving part 10 including driving wheels 11 configured to receive power from a farm machine so as to rotate and move forward, a connection rod 12 coupled to the driving wheel 11 so as to rotate whenever the driving wheels 11 rotate, and a support rod 15 connected to the upper portion of the connection rod 12 via a sprocket and a chain so as to rotate together with the connection rod 12 according to the rotation of the connection rod 12; a spot seeding furrow forming part 20 including a guide roll 21 to which power is transmitted from the support rod 15 of the driving part 10 through a connection of a sprocket and a chain, and a spot seeding furrow forming roll 22 configured to rotate in the state of abutting on the guide roll 21 and provided with a plurality of cutting means on the outer circumferential surface thereof; an adhesive supply part 30 including a guide roll 31 electrically driven through a connection of a sprocket and the chain from the rotary shaft of the spot seeding furrow forming roll 22, and an adhesive supply roll 32 configured to rotate in the state of abutting on the guide roll 31 and provided with a plurality coating means on the outer circumferential surface thereof; a seed supply part 40 including a guide roll 41 to which power is transmitted from the rotary shaft of the adhesive supply roll 32 through a connection of a sprocket and a chain, and a seed supply roll 42 configured to rotate in the state of abutting on the guide roll 41 and provided with a plurality of seed supply means on the outer circumference surface thereof; and a pressing part 50 including the guide roll 41 to which power is transmitted from the rotary shaft of the seed supply roll 42 through a connection of a sprocket and a chain and a pressing roll 52 configured to be rotated in the state of being in contact with the guide roll 51, whereby the coating material on which seeds are directly sown can be directly spread on the ground.

### [Prior Art Document]

### [Patent Document]

(Patent Document 0001) Korean UM Publication No. 20-0214872 (February 15, 2001)
(Patent Document 0002) Korean UM Publication No. 20-0440419 (June 12, 2008)
(Patent Document 0003) Korean Patent No. 10-0894564 (April 24, 2009)
(Patent Document 0004) Korean Patent No. 10-1254020 (April 16, 2013)

### Detailed Description of the Invention

### Technical Problem

The conventional direct seeding devices for a dry paddy field directly sow rice seeds to a dry paddy field so that it is not necessary to irrigate the paddy field and to transplant rice. Thus, it is possible to reduce labor, and mechanization and labor-saving are enabled from plowing of a rice field to harvesting. Particularly, by covering the ground with the cover material, which is a synthetic resin material, forming the holes in the cover material at regular intervals, and then sowing rice seeds only in the holes, it is possible to suppress the growth of weeds while minimizing the use of herbicide by preventing light from being transmitted through the remaining parts other than the holes. Furthermore, it is possible to maintain the ground temperature and to keep the ground warm, as well as to prevent soil erosion, propagation of soil-infectious germs, and soil contamination by various foreign substances.

A conventional direct seeding process of the conventional direct rice-seeding device will be described with reference to the device for direct seeding and spreading a cover material for use in direct rice-seeding of Korean Patent No. 10-0894564. The excavation means of the direct rice-seeding device forms two furrows as wide as the width of the cover material in the process of pulling the direct rice-seeding device by a tractor or the like, and then the cover material wound in the form of a roll in the spreading part installed behind the excavation part is unwound along the progressive direction of the direct seeding rice direct seeding device and spread over the ground between the two furrows.

Thus, when the cover material is spread over the ground by the above-mentioned spreading part, the wheel-type soil covering parts installed at the rear opposite sides of the soil covering part push soil to the opposite side edges of the cover material to cover the opposite side edges with the soil, so that the soil-covering and thus the fixing of the cover material are completed.

When the spreading of the cover material and soil-covering are completed as described above, the direct seeing machine of the direct seeding part installed behind the soil covering part forms holes at predetermined intervals in the cover material and sows rice seeds in the holes, and the compacting roller installed behind the direct seeding machine presses and compacts the portion in which the rice seeds are sown, thereby completing the direct seeding.

According to the direct seeding process of the above-described conventional direct rice-seeding device, the following problems may occur. Because only the opposite side edges of the cover material are covered with soil in the process of soil-covering the cover material spread over the ground, when wind is severely blown immediately after the cover material is spread and soil covering is performed, the spread cover material blown in the wind and thus soil covered on the cover material is separated from the cover material, whereby the spread cover material frequently peels off the ground.

Further, because a means for cutting the cover material spread over the ground is not provided, after the cover material is spread while towing the conventional direct seeding device from one end to the other end of a farmland using a tractor, and after direct seeding is performed, it is necessary for an operator to get off the tractor to cut the cover material in the direction perpendicular to the longitudinal direction of the cover material, and then to turn the travel direction of the tractor so as to repeatedly perform the spreading process of the cover material and the direct seeding process. Thus, it is necessary for the operator to cut the cover material whenever it is required to turn the travel direction of the tractor, which is complicated and inconvenient, thereby deteriorating the operation efficiency.

Therefore, in order to solve the problems of the prior art described above, there is an urgent need to develop a direct seeding device for a dry paddy field, which is capable of firmly fixing the mulching paper in the process of spreading the mulching paper, so that the mulching paper spread over the paper can be prevented from being blown in the wind, and, which is capable of easily cutting the completely spread mulching paper, so that the dry direct seeding can be efficiently performed.

### Technical Solution

A direct seeding device for a dry paddy field according to the present disclosure has been made in order to solve the problems in the prior art described above. The direct seeding device includes: a body frame 100 including a tractor connection part 101 disposed at a front side thereof and a gear box 102 provided at an upper side thereof to be connected to a driving shaft of a tractor and configured to receive power from the tractor and to output the power to a lateral side; a rotavator part 200 configured to crush soil of ground using a rotor 202 by receiving power through the gear box 102 for cultivating, and to scoop up and scatter some of the soil rearwards; a leveling part 300 configured to evenly level the ground by compacting the ground cultivated by the rotavator 200 while pressing the leveling roller 102 rotatably installed on the body frame 100; a spreading part 400 configured to support opposite ends of a mulching roll A, to spread a mulching paper over the ground using a mulching roller 404, and to indicate a height of the ground over which the mulching paper is spread; a roll-unwinding-prevention part 500 configured to prevent the mulching roll A of the spreading part 400 interlocked with the leveling part 300 from being inadvertently unwound; a soil covering part 600 configured to collect and convey the soil scattered from the rotavator part 200, and to scatter the soil on the mulching paper so as to fix the mulching paper; a mulching paper cutting part 700 configured to cut the mulching paper, on which mulching has been completed along a ridge, to raise an end of the cut mulching paper from the ground to a predetermined height, and then to fix the end; and a mulching paper burying part 800 configured to bury the end of the mulching paper fixed by the mulching paper cutting part 700 in a predetermined depth from the ground by covering the end of the mulching paper with soil when mulching is performed again along the ridge.

The rotavator part 200 includes: a power transmission means 201 installed on a side surface of the body frame 100 so as to transmit vertically downwards power input through an output shaft 102b of the gear box 102; and a rotor 202 including a plurality of blades 202b installed on a rotary shaft 202a, which is rotated by power transmitted through the power transmission means 201, at regular intervals, the rotor 202 being configured to crush and cultivate soil of the ground and to scoop up and scatter some of the soil rearwards.

The leveling part 300 includes: connection pieces 301 rotatably installed on opposite side walls 103 of the body frame 100, respectively; and a leveling roller 302 rotatably installed between the connection pieces 301, the leveling roller 302 being configured to compact and level the ground cultivated by the rotavator part 200 by pressing the ground by a weight thereof.

The spreading part 400 includes: a plurality of support rollers 401 installed in a lower portion of perforated portions 103a formed in the opposite side walls 103 of the body frame 100; a support shaft 402 installed in a transverse direction to penetrate the opposite side walls 103 of the body frame 100; roll anchoring bodies 403, first ends of which are coupled to the ends of the support shaft 402 outside the side walls 103 to be pivotable by a predetermined angle, and second ends of which are provided with pivot mounting parts 403a configured to support a winding pipe of the mulching roll; a mulching roller 404 coupled to pivot pieces pivotally installed on the opposite side walls 103 of the body frame 100, the mulching roller 404 being configured to pressing the mulching paper unwound from the mulching roll A supported by the roll anchoring bodies 403 such that the unwound mulching paper is brought into close contact with the ground; and a height indication rod 407 having a lower end coupled to one end of each of the pivot pieces 405 by a pin and an upper end configured to indicate a height of the ground over which mulching is performed by the mulching roller 404 on an indication part 406 installed on an upper portion of each of the side walls of the body frame 100.

The roll-unwinding-prevention part 500 includes: a transverse rod 501 installed between the opposite side walls 103 of the body frame 100; roll pressing rods 502 formed to protrude at regular intervals from the transverse rod 501 so as to circumscribe the mulching roll A supported by the spreading part 400 to prevent the mulching roll A from being inadvertently unwound; and dampers 503 installed between opposite ends of the transverse rod 501 and the leveling part 300 so as to cause the roll pressing rods 502 to circumscribe the mulching roll A with a predetermined pressure.

The soil covering part 600 includes: a plurality of feed chutes 601 provided in a width direction of the main body frame 100 above the spreading part 400 so as to load soil scooped up by the rotavator part 200 thereon; and a feed screw 602 installed inside the feed chutes 601 and driven by a motor provided in the body frame 100 so as to feed the soil loaded on the feed chutes 601 such that the soil is discharged to a rear side of the mulching roller 404.

The mulching paper cutting part 700 includes: first and second cylinders 701 and 702 vertically installed at a rear upper portion of the body frame 100 so as to be operated by hydraulic pressure supplied from the tractor; a lifting cutting blade 703 vertically raised and lowered by the first cylinder 701 so as to press and cut the mulching paper spread over the ground in the width direction; and a rotary cutting blade 705 rotated by the second cylinder 702 to support cutting of the mulching paper pressed and cut by the lifting cutting blade 703 and to lift up an end of the cut mulching paper such that the end of the cut mulching paper is fixedly brought into close contact with a bottom surface of a mulching paper fixing part 704.

The mulching paper burying part 800 includes: a third cylinder 801 vertically installed at a rear upper portion of the body frame 100 so as to be operated by hydraulic pressure supplied from the tractor; a burying piece 802 vertically raised and lowered by the third cylinder 801 to press an end of the mulching paper fixed after by the mulching paper cutting part 700 in a widthwise and to bury the end of the mulching paper at a predetermined depth from the ground; a covering soil storage box 803 rotatably installed behind the soil covering part 600 and configured to store some of the soil discharged from the soil covering part 600 and to spread the stored soil on the mulching paper when the end of the mulching paper is buried in the ground by the burying piece 802 such that the mulching paper is fixed to the ground; and a link device 804 installed behind the body frame 100 and configured to be interlocked with the mulching paper cutting part 700 so as to cause the end of the mulching paper fixed to the mulching paper cutting part 700 to be separated from the mulching paper cutting part 700 and to rotate the covering soil storage box 803 such that the soil contained in the covering soil storage box 803 is discharged.

The link device 804 includes: a rotary plate 804a installed behind the body frame 100 and configured to be interlocked with the mulching paper cutting part 700 so as to cause the end of the mulching paper fixed to the mulching paper cutting part 700 to be separated from the mulching paper cutting part 700, the rotary plate 804a being installed to the body frame 100 to be rotatable by a predetermined angle so as to rotate the covering soil storage box 803 and to be returned to an original position thereof by a coil spring 804b; a first link piece 804c having a first end pin-coupled to the rotary plate 804a and a second end pin-coupled to a side face of the lifting cutting blade 703; a second link piece 804d having a first end pin-coupled to the rotary plate 804a and a second end pin-coupled to the mulching paper fixing part 704; a third link piece 804e having a first end pin-coupled to the rotary plate 804a and a second end pin-coupled to the burying piece 802; and a fourth link piece 804f having a first end pin-coupled to the burying piece 802 and a second end pin-coupled to the covering soil storage box 803.

A long hole is formed at upper ends of the first link piece 804c and the third link piece 804e pin-coupled to the rotary plate 804a so as to pin-couple the first link piece 804c and the third link piece 804e to the rotary plate 804a using the long hole, whereby the first link piece 804c and the third link piece 804e are not interlocked with each other by the rotary plate 804a.

With the above-described configuration, the direct seeding device for a dried paddy field of the present disclosure is capable of correctly and efficiently performing a dried paddy direct seeding process including leveling the dried paddy field, spreading a direct seeding mulching paper, covering the mulching paper with earth so as to fix the mulching paper, cutting the mulching paper, and then fixing the mulching paper to the ground again.

### Advantageous Effects

The direct seeding device for a dried paddy field according to the present disclosure is capable of rapidly, stably, and efficiently performing a dried paddy direct seeding process including land-leveling the dried paddy field, spreading a direct seeding mulching paper, covering the mulching paper with earth so as to fix the mulching paper, cutting the mulching paper, and then fixing the mulching paper to the ground again, in the process of being towed by a tractor.

Especially, in the process of dry direct seeding, by covering the mulching paper with soil so as to fix the mulching paper, it is possible to prevent the mulching paper from blowing in the wind, and to prevent the mulching paper from floating on water due to buoyancy when raining or when irrigating the paddy, so that the mulching state can be stably maintained.

In addition, by automatically and correctly cutting the mulching paper after the spreading of the mulching paper is completed, and by stably fixing again the end of the mulching paper to the ground when the spreading of the mulching paper is performed again, it is possible to improve capability and efficiency according to the continuous operation of spreading the mulching paper.

### Brief Description of the Drawings

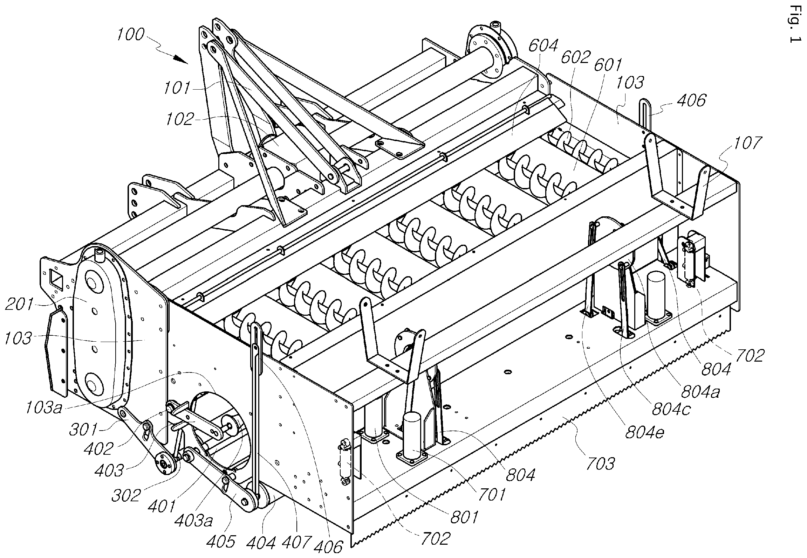

FIG. 1 is a perspective view illustrating the direct seeding device for a dry paddy field according to the embodiment of the present disclosure;

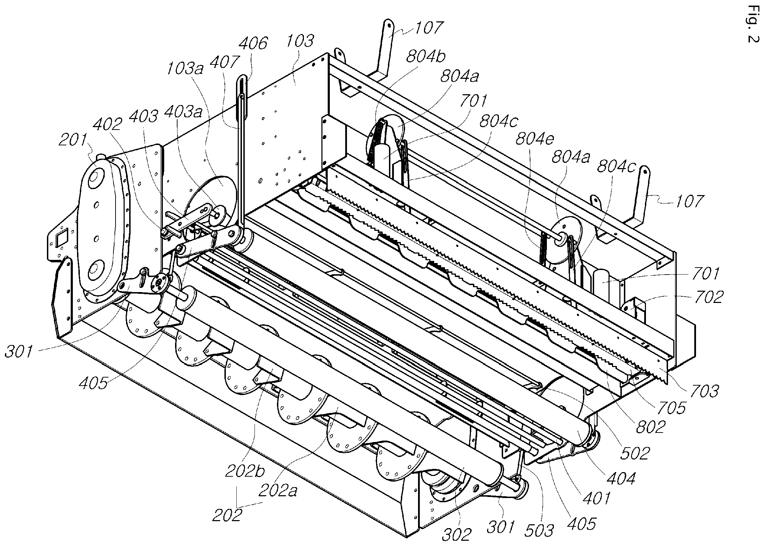

FIG. 2 is a bottom side perspective view illustrating the direct seeding device for a dry paddy field according to the embodiment of the present disclosure;

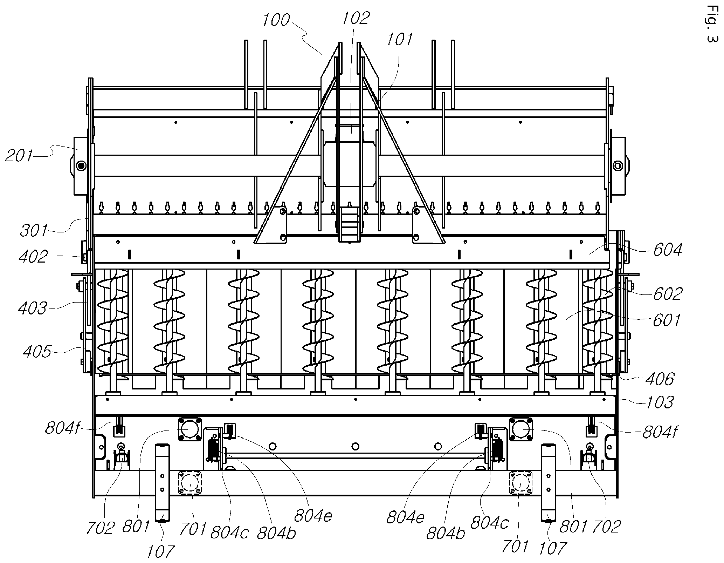

FIG. 3 is a plan view illustrating the direct seeding device for a dry paddy field according to the embodiment of the present disclosure;

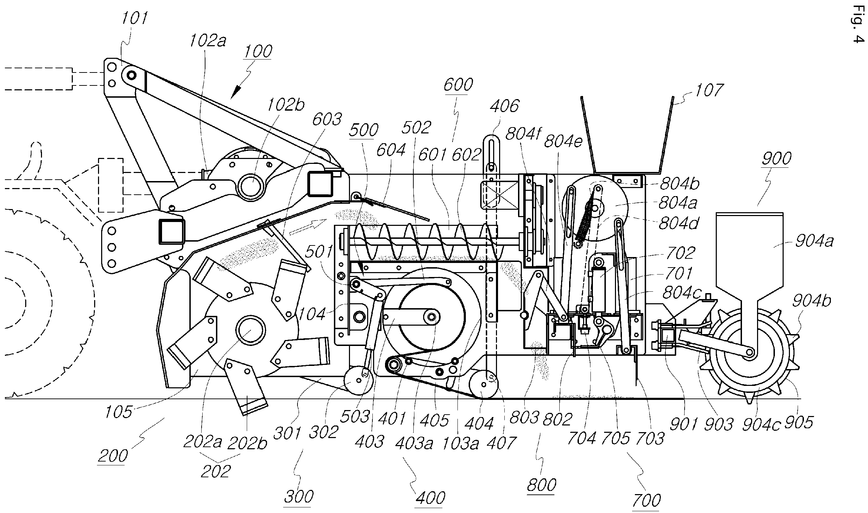

FIG. 4 is a side sectional view illustrating the direct seeding device for a dry paddy field according to the embodiment of the present disclosure;
FIGS. 5A to 5D are operation state views sequentially illustrating the operating procedure of the direct seeding device for a dry paddy field according to the embodiment of the present disclosure; and

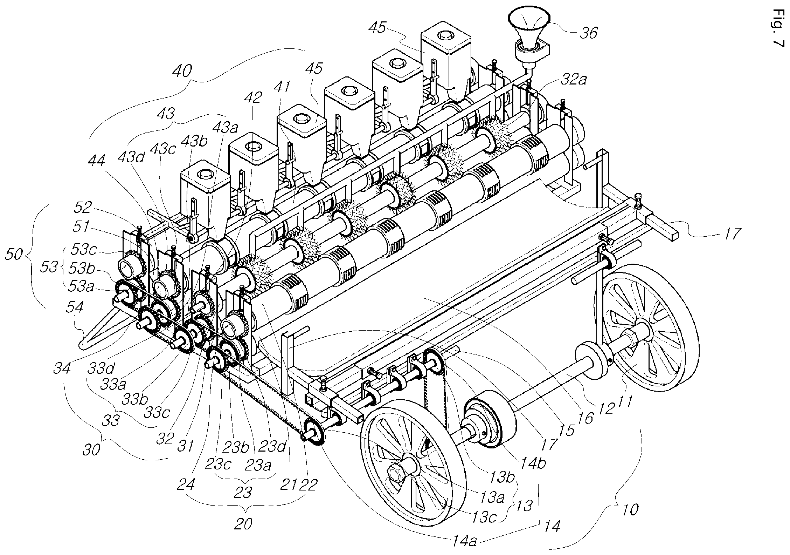

FIGS. 6 and 7 are exemplary views illustrating conventional direct seeding devices.

### Mode for Carrying Out the Invention

Hereinafter, the configuration and operation of a direct seeding device for a dry paddy according to an embodiment of the present disclosure will be described in more detail with reference to the accompanying drawings.

The direct seeding device for a dry paddy field according to the present disclosure includes: a body frame 100 including a tractor connection part 101 formed to be capable of being towed by a tractor and a gear box 102 configured to receive power from the tractor; a rotavator part 200 configured to crush soil of ground using a rotor 202 by receiving power through the gear box 102 for cultivating, and to scoop up and scatter some of the soil rearwards; a leveling part 300 configured to evenly level the ground by compacting the ground while pressing the leveling roller 302 rotatably installed on the body frame 100; a spreading part 400 configured to support opposite ends of a mulching roll A, to spread a mulching paper over the ground using a mulching roller 404, and to indicate a height of the ground over which the mulching paper is spread; a roll-unwinding-prevention part 500 configured to prevent the mulching roll A of the spreading part 400 from being inadvertently unwound; a soil covering part 600 configured to collect and convey the soil scattered from the rotavator part 200, and to scatter the soil on the mulching paper so as to fix the mulching paper; a mulching paper cutting part 700 configured to cut the mulching paper widthwise, on which mulching has been completed, to raise the cut mulching paper from the ground to a predetermined height, and then to fix the end; and a mulching paper burying part 800 configured to bury the end of the mulching paper fixed by the mulching paper cutting part 700 in the ground by covering the end of the mulching paper with soil.

In order to enable the towing by the tractor and to receive power from the tractor, the body frame 100 includes the tractor connection part 101 formed on the front side to be capable of being towed by the tractor, and the gear box 102 located in the upper portion thereof and connected to the driving shaft of the tractor so as to receive power from the tractor and to output the power to the lateral side.

In addition, the main body frame 100 is configured as a structure in which the front, rear, left, right, and upper sides are blocked, and the inner space is divided by partitions connected between the opposite inner surfaces within the body frame 100. Among the divided space portions, the rotavator part 200 is configured in the first space portion 105 located in the front side, the spreading part 400 is configured in the second space portion 106 located behind the first space portion 105, the leveling part 300 is configured below the spreading part 400, the soil covering part 600 is configured above the spreading part 400, the roll-unwinding-prevention part 500 is configured in front of the spreading part 400, and the mulching paper cutting part 700 and the mulching paper burying part 800 are configured behind the spreading part 400.

The gear box 102 includes an input shaft 102a connected to the tractor driving shaft and formed to protrude forwards, output shafts 102b provided at the opposite sides to output the driving power transmitted through the input shaft 102a, and a gear device provided therein to uniformly transmit the power of the input shaft 102a to the output shafts 102b installed at the opposite sides thereof.

The above-mentioned gear box 102 is well-known in the technical field to which the present disclosure belongs, and thus illustration thereof in a cross-sectional view for showing the inner structure thereof and a technical description thereof will be omitted.

In the upper portion, the main frame 100 may further include a preliminary mulching roll stacking table 107 for loading and storing preliminary mulching rolls therein.

The rotavator part 200 includes: a power transmission means 201 installed on a side surface of the body frame 100 so as to transmit vertically downwards power input through the output shaft 102b of the gear box 102 in order to crush and cultivate the soil of the ground and to scoop up some of the soil such that the soil is scattered rearwards; and a rotor 202 including a plurality of blades 202b installed on a rotary shaft 202a, which is rotated by the power transmitted through the power transmission means, at regular intervals, the rotor 202 being configured to crush and cultivate soil of the ground and to scoop up some of the soil to be scattered rearwards.

In order to efficiently transmit the power, which is transmitted through the output shaft 102b of the gear box 102, to the rotary shaft 201a installed below the rotavator part 202, the power transmission means 201 may include a plurality of gears which are engaged with each other, or may include a roller chain and a chain sprocket.

The above-mentioned power transmission means 201 is well-known in the technical field to which the present disclosure belongs, and thus illustration thereof in a cross-sectional view for showing the inner structure thereof and a technical description thereof will be omitted.

The rotor 202 includes circular attachments plates integrally formed on the rotary shaft 202a, to which power is transmitted by the power transmission means 201, at regular intervals, and a plurality of blades 202b radially installed on each of the attachment plates, whereby the blades 202b crush and cultivate the soil of the ground while being rotated at high speed by the rotating force of the rotary shaft 202a and scoop up and scatter some of the soil toward the feed chute 601 of the soil covering part 600.

At this time, a top plate of the body frame 100, which is located above the first space portion 105 in which the rotavator part 200 is configured, is formed to have an inclination in which the front side is lower than the rear side, so that the soil scooped up from the ground by the rotor 202 can be smoothly scattered toward the feed chute 601.

In addition, the upper plate of the body frame 100 may further include a filter plate 603 that filters out stones included in the soil scattered towards the feed chute 601 by the rotor 202 and having a size equal to or larger than a predetermined size by adjusting the depth of the filter plate 603 being inserted into the first space portion 105, whereby it is possible to prevent the feed chute 601 from being damaged or clogged by stones caught between the feed chute 601 and the feed screw 602 in the process of operating the feed screw 602 installed inside the feed chute 601.

The blades 202b may be formed into a shape that can easily scoop up and crush a large amount of soil, and may be formed in a shape similar to a general cultivating blade.

The leveling part 300 includes: connection pieces 301 rotatably installed on the opposite side walls 103 of the body frame 100 to press and compact in order to evenly level the ground on which the mulching paper is to be spread; and a leveling roller 302 rotatably installed between the connection pieces 301, the leveling roller 302 being configured to compact and level the ground, on which direct seeding is to be performed, by pressing the ground by the weight thereof.

In order to make the leveling roller 302 movable up and down to correspond to the unevenness of the ground in the process of evenly leveling the ground, on which the mulching paper is to be spread, by pressing the ground by the weight of the leveling roller 302, it is preferable that the leveling roller 302 be installed to be capable of idling between the connection pieces 301, which are installed to be rotatable by a predetermined angle.

The spreading part 400 includes: a plurality of support rollers installed in the lower portions of perforated portions 103a formed in the opposite side walls 103 of the body frame 100 in order to unwind the mulching role A while supporting the opposite ends of the mulching roll A and to indicate the height of the ground on which the mulching paper is spread while spreading the mulching paper on the ground using a mulching roller 404; a support shaft 402 installed in a transverse direction to penetrate the opposite side walls 103 of the body frame 100; roll anchoring bodies 403, first ends of which are coupled to the ends of the support shaft 402 outside the side walls 103 to be pivotable by a predetermined angle, and second ends of which are provided with pivot mounting parts 403a configured to support a winding pipe of the mulching roll; a mulching roller 404 coupled to pivot pieces pivotally installed on the opposite side walls 103 of the body frame 100, the mulching roller 404 being configured to pressing the mulching paper unwound from the mulching roll A supported by the roll anchoring bodies 403 such that the unwound mulching paper is brought into close contact with the ground; and a height indication rod 407 having a lower end coupled to one end of each of the pivot pieces 405 by a pin and an upper end configured to indicate a height of the ground over which mulching is performed by the mulching roller 404 on an indication part 406 installed on an upper portion of each of the side walls.

Because the plurality support rollers 401 are installed in the lower portions of the perforated portions 103a formed in the opposite side walls 103 of the body frame 100, when the mulching roll is introduced into the body frame 100 through the perforated portions 103a formed in the side walls 103 of the body frame, the mulching rolls can be supported at a predetermined height.

The support shaft 402 is installed through the opposite side walls 103 of the body frame 100 in order to install the roll anchoring bodies 403 that rotatably supports the mulching roll, and the opposite ends of the support shaft 402 are installed to protrude from the opposite side walls 103 of the body frame 100.

In order to prevent the mulching roll inserted into the body frame 100 through the perforated portions 103a from inadvertently escaping through the perforated portions 103a and to rotatably support the mulching roll, one ends of the roll anchoring bodies 403 are coupled to the ends of the support shaft 402 outside the side walls 103 so as to be rotatable by a predetermined angle, and the other ends of the roll anchoring bodies 403 are provided with pivot mounting parts 403a that support the winding pipe of the mulching roll. Thus, by supporting the opposite ends of the winding pipe of the mulching roll inserted into the inside of the body frame 100 through the perforated portions 103a by the pivot mounting parts 403a, the mulching paper is freely wound while the mulching roll is rotated by the pivot mounting parts 403a.

At this time, as the pivot mounting parts 403a, it is possible to use typical tension rollers, each of which includes a coil spring therein to have a tension function in the transverse direction so as to be in close, stable, and firm contact with and to support the winding pipe on which the mulching role is wound.

The mulching roller 404 is installed between the opposite side walls 103 of the body frame 100 to be positioned below the support rollers 401 and presses the mulching paper unwound from the mulching roll rotating about the roll anchoring bodies 403 by its own weight such that the mulching paper is brought into close contact with the ground.

At this time, in order to be movable up and down to correspond to the unevenness of the ground, the mulching roller 404 is coupled to the pivot pieces 405 which are installed on the opposite side walls 103 of the body frame 100 to be rotatable by a predetermined angle.

The height indication rods 407 are outside the side walls 103 of the body frame 100 to be movable up and down. The lower ends of the height indication rods are pin-coupled to one side ends of the pivot pieces 405 and the upper ends move up and down in the vertical direction in the indication part 406 installed in the upper portions of the side walls of the body frame 100 so as indicate the height. Thus, the height of the ground on which the mulching is performed by the mulching roller 404, which allows the operator who performs mulching while driving the tractor to confirm the height of the ground, on which the mulching paper is spread, through the height indicated in the indication part 406 by the height indication rods 407 without getting off the tractor.

Meanwhile, a biodegradable direct seeding mulching roll is preferably used. That is, the biodegradable direct seeding mulching roll is produced by blow molding a biodegradable mulching film raw material mixture obtained by mixing calcium carbonate encapsulated with stearic acid with a raw material in the form of powder or pellet composed of an aliphatic polyester material to produce a biodegradable agricultural mulching film, then forming a plurality of holes at predetermined intervals in the biodegradable agricultural mulching film after the film, and then attaching seeds attached to the peripheries of the holes. Since the strength is maintained while the roll shape is being maintained so that smooth mulching can be performed. After being spread on the ground to perform mulching, the mulching paper can be spontaneously decomposed without causing environmental pollution. By using such a biodegradable direct seeding mulching roll, it is possible to simultaneously perform mulching and direct seeding without using a spot direct seeding machine 904.

The manufacturing method of the biodegradable direct seeding mulching roll and the technique related to the product are well known, and a more detailed technical description thereof will be omitted.

The roll-unwinding-prevention part 500 includes: a transverse rod 501 installed between the opposite side walls 103 of the body frame 100 in order to prevent the mulching roll A of the spreading part 400 from being inadvertently unwound; roll pressing rods 502 formed to protrude at regular intervals from the transverse rod 501 so as to circumscribe the mulching roll A supported by the spreading part 400 to prevent the mulching roll A from being inadvertently unwound; and dampers 503 installed between opposite ends of the transverse rod 501 and the leveling part 300 so as to cause the roll pressing rods 502 to circumscribe the mulching roll A with a predetermined pressure.

The transverse bar 501 is installed between the side walls 103 of the body frame 100 so as to be positioned inside the second space portion 106 of the body frame 100, and the roll pressing rods 502 are integrally formed on the transverse bar 501 so as to protrude toward mulching roll A mounted on the spreading part 400. One end of each of the roll pressing rods 502 is integrally formed at one of points where the transverse bar 501 is equally divided into multiple sections in the longitudinal direction thereof and the other end of each of the roll pressing rods 502 is bent so as to be stably in close contact with the mulching roll A.

Protrusions are formed to protrude at the opposite ends of the transverse rods, the upper ends of the dampers 503 are pin-coupled to one sides of the protrusions, and the lower ends of the dampers 503 are rotatably installed on the opposite side walls 103 of the body frame 100 and pin-coupled to one side of the connection pieces 301 that cause the leveling roller 302 to come into close contact with the ground by its own weight. Thus, in the process of pressing the ground by the weight of the leveling roller 302 to evenly leveling the ground, the transverse rod 501 is rotated with a predetermined damping force such that the roll pressing rods 502 integrally formed on the transverse rod 501 press the outer peripheral surface of the mulching roll A mounted on the spreading part 400 with a predetermined pressure. As a result, even in the state in which no rotating pressure is applied to the mulching roll A, it is possible to prevent the mulching roll A from idling, thereby preventing the mulching paper from being inadvertently unwound.

The soil covering part includes: a plurality of feed chutes 601 provided in a width direction of the main body frame 100 above the spreading part 400 so as to load soil scooped up by the rotavator part 200 thereon in order to collect the soil spread in the rotavator part 200 and to carry the soil so spread the soil on the spread mulching paper; and a feed screw 602 installed inside the feed chutes 601 and driven by a motor provided in the body frame 100 so as to feed the soil loaded on the feed chutes 601 such that the soil is discharged to a rear side of the mulching roller 404.

The plurality of feed chutes are successively disposed in the width direction of the body frame 100 above the spreading part 400. The front cross-sectional shape of each feed chutes 601 is a semi-circular shape, the front side of each feed chute 601 is closed, and the rear side of each feed chute 601 is open. Thus, when the soil is loaded on the feed chute 601, the soil drops above the feed chute 601 to be loaded into the chute 601. The soil loaded inside the chute 601 is preferably discharged through the rear opening of the feed chute 601. However, without being limited thereto, it is noted in advance that the front cross-sectional shape of the feed chute 601 may be a "V" shape in consideration of manufacturing convenience.

The feed screw 602 is installed inside the feed chute 601 and is driven by a motor installed in the body frame 100, whereby the soil scattered by the rotavator part 200 and loaded in the feed chute 601 is forcibly fed from the front side to the rear side so as to freely drop while being discharged through the rear opening of the feed chute 601.

Above the feed chute 601 of the soil covering part 600, a blocking plate 604 may be further provided to guide the soil scattered by the rotavator part 200 towards the feed chute 601 such that the scattered soil can be smoothly loaded in the feed chute 601.

The mulching paper cutting part 700 includes: first and second cylinders 701 and 702 vertically installed at a rear upper portion of the body frame 100 so as to be operated by hydraulic pressure supplied from the tractor in order to lift up and fix the mulching paper on which the mulching is completed to a predetermined height after cutting the mulching paper in the width direction; a lifting cutting blade 703 vertically raised and lowered by the first cylinder 701 so as to press and cut the mulching paper spread over the ground in the width direction; and a rotary cutting blade 705 rotated by the second cylinder 702 to support cutting of the mulching paper pressed and cut by the lifting cutting blade 703 and to lift up an end of the cut mulching paper such that the end of the cut mulching paper is fixedly brought into close contact with a bottom surface of a mulching paper fixing part 704.

As the first and second cylinders 701 and 702, hydraulic cylinders are provided to be operated by the hydraulic pressure supplied from the tractor, and preferably include a hydraulic device such as a solenoid valve for divisionally supplying and controlling the hydraulic pressure supplied from the tractor such that the first and second cylinders can be separately operated.

The hydraulic control device is well known in the technical field of the present disclosure, and a detailed illustration in the drawing for describing the structure and function of the hydraulic control device and a technical description thereof will be omitted.

The lifting cutting blade 703 is longer than the widthwise length of the mulching paper and is detachably installed to the lower end of the piston rod of the first cylinder 701 in the width direction of the mulching paper. Thus, when the piston rod of the first cylinder 701 is lowered while being discharged, the mulching paper is cut in the width direction while being pushed into the ground on which the mulching paper is spread to a predetermined depth.

A knife edge may be formed at the lower end of the lifting cutting blade 703 for smooth cutting of the mulching paper. However, since the blade is repeatedly put into the ground, it is preferable to form a serrated portion over the entire lifting cutting blade 703 in the longitudinal direction rather than forming a sharp knife edge which is easily damaged.

The rotary cutting edge 705 is installed at the other side of the pivot piece 405, which is formed to be longer than the widthwise length of the mulching paper and is pin-coupled to the lower end of the piston rod of the second cylinder 702 at one side thereof so as to rotate when the piston rod is contracted and extended, in the width direction of the mulching paper, whereby the rotary cutting blade 705 is rotated by a predetermined angle together with the pivot piece 405 when the piston rod of the second cylinder 702 is lowered while being discharged.

Therefore, when the lifting cutting blade 703 is in the state in which it is pushed into the ground by a predetermined depth by the first cylinder 701 while cutting the mulching paper spread over the ground is primarily cut in the width direction, the rotary cutting blade 705 secondarily cuts the mulching paper by cutting the mulching paper adjacent to the lift cutting edge 703 while being rotated to the front side of the body frame by the second cylinder 702.

Therefore, it is preferable that the rotary cutting edge 705 be formed with saw teeth at the lower end thereof over the entire length thereof in order to prevent slipping of the mulching paper when cutting the mulching paper.

The mulching paper fixing part 704 for fixing the end of the mulching paper cut by the rotary cutting blade 705 is installed to be vertically movable in conjunction with the link device 804 of the mulching paper burying part 800. Therefore, when the end of the mulching paper cut by the rotary cutting blade 705 is lifted up to a predetermined height by the rotary cutting blade 705, the mulching paper fixing part 704 is lowered and is brought into contact with one surface of the rotary cutting blade 705. Thus, the end of the mulching paper is engaged between the mulching paper fixing part 704 and the rotary cutting blade 705 and is fixed on a predetermined height.

In order to absorb and alleviate the impact that occurs when the mulching paper fixing part 704 is lowered and brought into contact with one surface of the rotary cutting blade 705, which is being rotated, thereby nipping and fixing the mulching paper therebetween, it is preferable that the mulching paper fixing part 704 be formed of a shock-absorbing material.

The mulching paper burying part 800 includes: a third cylinder 801 vertically installed at a rear upper portion of the body frame 100 to be operated by hydraulic pressure supplied from the tractor in order to bury the end of the mulching paper fixed by the mulching paper cutting part 700 in the ground and to cover the end of the mulching paper with the soil so as to fix the end of the mulching paper; a burying piece 802 vertically raised and lowered by the third cylinder 801 to press an end of the mulching paper fixed after by the mulching paper cutting part 700 in a widthwise and to bury the end of the mulching paper at a predetermined depth from the ground; a covering soil storage box 803 rotatably installed behind the soil covering part 600 and configured to store some of the soil discharged from the soil covering part 600 and to spread the stored soil on the mulching paper when the end of the mulching paper is buried in the ground by the burying piece 802 such that the mulching paper is fixed to the ground; and a link device 804 installed behind the body frame 100 and configured to be interlocked with the mulching paper cutting part 700 so as to cause the end of the mulching paper fixed to the mulching paper cutting part 700 to be separated from the mulching paper cutting part 700 and to rotate the covering soil storage box 803 such that the soil contained in the covering soil storage box 803 is discharged.

The third cylinder 801 is preferably controlled together with the first and second cylinders 701 and 702 by a hydraulic control device including a solenoid valve installed for controlling the operations of the first and second cylinders 701 and 702.

The burying piece 802 is formed to be longer than the widthwise length of the mulching paper and is installed to the lower end of the piston rod of the third cylinder 801 in the width direction of the mulching paper. Thus, when the piston rod of the third cylinder 801 is lowered while being discharged, the end of the mulching paper fixed in the mulching paper cutting part 700 is put in the ground to be buried to a predetermined depth.

In order to make some of the soil forcibly discharged and dropping from the feed chute 601 by the feed screw of the soil covering part 600 to be naturally contained within the covering soil storage box 803, the covering soil storage box 803 is rotatably installed between the side walls of the body frame in a length corresponding to the widthwise length of the feed chute 601 such that the opening of the soil storage box 803 faces upwards at the rear side of the soil covering part 600.

The link device 804 includes: a rotary plate 804a installed behind the body frame 100 and configured to be interlocked with the mulching paper cutting part 700 so as to cause the end of the mulching paper fixed to the mulching paper cutting part 700 to be separated from the mulching paper cutting part 700, the rotary plate 804a being installed to the body frame 100 to be rotatable by a predetermined angle so as to rotate the covering soil storage box 803 and to be returned to an original position thereof by a coil spring 804b; a first link piece 804c having a first end pin-coupled to the rotary plate 804a and a second end pin-coupled to a side face of the lifting cutting blade 703; a second link piece 804d having a first end pin-coupled to the rotary plate 804a and a second end pin-coupled to the mulching paper fixing part 704; a third link piece 804e having a first end pin-coupled to the rotary plate 804a and a second end pin-coupled to the burying piece 802; and a fourth link piece 804f having a first end pin-coupled to the burying piece 804a and a second end pin-coupled to the covering soil storage box 803.

At this time, a long hole is formed at the upper ends of the first link piece 804c and the third link piece 804e pin-coupled to the rotary plate 804a so as to pin-couple the first link piece 804c and the third link piece 804e to the rotary plate 804a using the long hole, whereby, when the rotary plate 804a is rotated by the first link piece 804c, the third link piece 804e pin-coupled to the long hole is not raised nor lowered because the coupling pin moves along the long hole when the rotary plate 804a is rotated.

In addition, when the rotary plate 804a is rotated by the third link piece 804e, the first link piece 804c pin-coupled to the long hole is not raised or lowered since the coupling pin moves along the long hole when the rotary plate 804a is rotated, whereby the first link piece 804c and the third link piece 804e are not interlocked with each other by the rotary plate 804a.

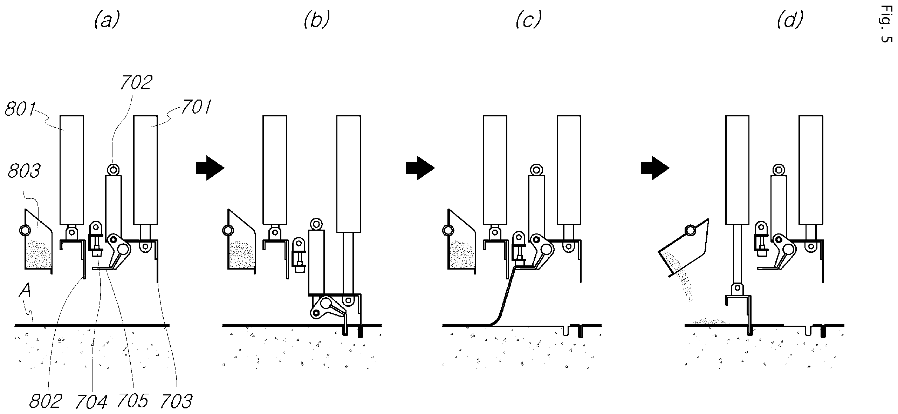

Accordingly, in the state in which all the lifting cutting blade 703, the mulching paper fixing part 704, and the rotary cutting blade 705 are located at the highest position as illustrated in FIG. 5A, when the process of primarily cutting the mulching paper is performed as the lifting cutting blade 703 and the rotary cutting blade 705 are simultaneously lowered, the rotary plate 804a of the link device 804 is rotated by a predetermined angle by the first link piece 804c and power is only transmitted to the second link piece 804d pin-coupled to the rotary plate 804a. Then, as illustrated in FIG. 5C, as the mulching paper fixing part 704 is raised and the rotary cutting blade 705 is rotated by the second cylinder 702, the secondary cutting is performed to cut the mulching paper, and when the lifting cutting blade 703 is raised by the first cylinder 701, the rotary plate 804a of the link device 804 is rotated in a direction opposite to the rotating direction at the time of primarily cutting operation described above. Then, the power is transmitted to the second link piece 804d pin-coupled to the rotary plate 804a and thus the mulching paper fixing part 704 is lowered, whereby the end of the mulching paper cut through the primary and secondary cutting is nipped and fixed between the mulching paper fixing part 704 and the rotary cutting blade 705.

Next, when the burying piece 802 is lowered by the third cylinder 801 as illustrated in FIG. 5D, the rotary plate 804a is rotated by the third link piece 804e and power is transmitted to the second link piece 804d so that the mulching paper fixing part 704 is raised, whereby the end of the mulching paper nipped and fixed between the mulching paper fixing part 704 and the rotary cutting blade 705 falls out and is buried in the ground by the burying piece by a predetermined depth.

The end of the mulching paper is buried at a predetermined depth in the ground by the burying piece 802, and the covering soil storage box 803 is rotated by the fourth link piece 804f pin-coupled between the burying piece 802 and the soil storage box 803. Then, the soil contained in the soil storage box 803 is poured onto the mulching paper 80 fixed to the ground by the burying piece 802, so that the mulching paper having the end buried in the ground is covered with the soil by the burying piece 802 so as to be fixed. Therefore, even if the burying piece 802 is raised again, the fixed state of the mulching paper fixed to the ground can be stably maintained, so that the successive spreading of the mulching paper can be stably performed.

On the other hand, a direct seeding part 900, which simultaneously performs perforation and direct seeding on the mulching paper spread on the ground by the spread part 400, may be selectively attached to or detached from the rear of the main frame.

That is, in the case in which a biodegradable direct seeding mulching roll, to which the seeds to be sown are previously attached, is used, the additional construction of the direct seeding part 900 is not required. However, when the mulching roll is made of a general vinyl sheet, the direct seeding device includes: a support frame 901 installed behind the body frame 100 in the transverse direction to continuously perform perforation and direct seeding on the mulching paper spread on the ground; a clamp 903 coupled to the support frame 901 to be capable of being positioned in the transverse direction; a plurality of direct seeding machines 904 installed at regular intervals behind the body frame 100 by the support frame and the clamp 903; and wheels 905 installed at the opposite ends of the support frame 901 to support the load of the body frame 100 and to press the opposite edges of the mulching paper spread on the ground to be deeply inserted into and fixed to the ground.

The direct seeding machine 904 includes: a seed box 904a that stores a large amount of rice seeds in the upper portion thereof; and a direct seeding drum 904c having spot seeding devices 904b radially formed on the outer peripheral surface thereof, the spot seeding devices being configured to perforate the mulching paper while being rotated by frictional force with the ground, to form grooves having a predetermined depth in the ground, and to sow seeds by putting the seeds, which are received from the seed box 904a, into the grooves formed in the ground one by one.

The structure of the direct seeding machine 904 is well known in the technical field of the present disclosure, and a detailed illustration in the drawings and a technical description thereof will be omitted.

Now, a dry direct seeding process using the direct seeding device for a dry paddy field, to which the technique of the present disclosure, will be described.

First, by connecting the tractor connection part 101 formed at the front end of the body frame 100 to the rear side of the tractor, connecting the driving shaft protruding to the rear side of the tractor to the input shaft 102a protruding to the front side of the gear box 102 of the body frame 100, and connecting the motor of the soil covering part 600 and the hydraulic device of the tractor T using a hydraulic hose, the direct seeding device for a dry paddy field of the present disclosure is capable of using the power of the tractor while being towed by the tractor.

Then, when the connection to the tractor and the preparation of the direct seeding machines 904 are both completed, the mulching roll A is introduced into the body frame 100 through the perforated portions 103a formed in the opposite side walls 103 of the body frame 100, then, in the state in which the pivot mounting parts 403a of the roll anchoring bodies 403 installed on the opposite side walls 103 of the body frame 100 are fitted to the opposite ends of the winding rod of the mulching roll to fix the mulching roll, the end of the mulching roll is unwound and the end of the mulching paper unwound at one side of a farmland in which mulching and direct seeding are to be simultaneously performed is covered with soil to be fixed.

When the preparation of mulching is completed as described above, the direct seeding device for a dry paddy field of the present disclosure is towed using the tractor T. In the process of being towed by the tractor, the rotor 202 of the rotavator part located in the front portion of the body frame 100 is received of the power of the tractor to be rotated in a high speed, whereby the rotor 202 crushes and cultivates the ground and scoops up and scatters the soil of the ground rearwards.

In addition, when the leveling roller 302 of the leveling part 300 located behind the rotavator part 200 presses and flatly compacts the ground crushed and cultivated by the rotor 202, the mulching roll located behind the leveling part 300 is rotated and unwound. The unwound mulching paper is pressed by the mulching roller 404 to be in close contact with the flatly leveled ground, whereby spreading of the mulching paper is completed.

When the spreading of the mulching paper is completed as described above, the soil scattered by the rotavator part 200 is discharged to the rear side of the spreading part 400 through the feed chute 601 of the soil covering part 600 and is scattered on the upper surface of the mulching paper spread on the leveled ground so that the upper surface of the mulching paper is uniformly covered with the soil. Thus, it is possible to prevent either side of the mulching paper from being crumpled or blowing in the wind in the process of spreading the mulching paper on the ground.

Thus, after performing mulching and direct seeding while towing the direct seeding device for a dry paddy field of the present disclosure to a longitudinal direction of one side of a farmland using a tractor, the next mulching and direct seeding work can be rapidly prepared by turning the tractor after the mulching paper is automatically cut using the mulching paper cutting part 700.

When the turning of the tractor and the spreading of the mulching paper are performed again, by burying an end of the mulching paper in the ground again by the burying piece 802, and then by pouring the soil in the covering soil storage box 803 to the end of the mulching paper to fix the mulching paper, the end of mulching paper can be rapidly and stably fixed and the spreading of the mulching paper can be rapidly performed again, and thus, the efficiency of the dry direct seeding is improved.

Embodiments of the present disclosure have been shown and described above, but the present disclosure is not limited to the specific embodiments described above. Various changes and modifications can be made by a person ordinarily skilled in the art without departing from the spirit and scope of the present disclosure, and the changes and modifications shall not be understood individually from the technical idea or view point of the present disclosure.

## Claims

1. A direct seeding device for a dry paddy field, the direct seeding device comprising:
a body frame (100) including a tractor connection part (101) disposed at a front side thereof and a gear box (102) provided at an upper side thereof to be connected to a driving shaft of a tractor and configured to receive power from the tractor and to output the power to a lateral side;
a rotavator part (200) configured to crush soil of ground using a rotor (202) by receiving power through the gear box (102) for cultivating, and to scoop up and scatter some of the soil rearwards;
a leveling part (300) configured to evenly level the ground by compacting the ground cultivated by the rotavator (200) while pressing the leveling roller (102) rotatably installed on the body frame (100);
a spreading part (400) configured to support opposite ends of a mulching roll (A), to spread a mulching paper over the ground using a mulching roller (404), and to indicate a height of the ground over which the mulching paper is spread;
a roll-unwinding-prevention part (500) configured to prevent the mulching roll (A) of the spreading part (400) interlocked with the leveling part from being inadvertently unwound;
a soil covering part (600) configured to collect and convey the soil scattered from the rotavator part (200), and to scatter the soil on the mulching paper so as to fix the mulching paper;
a mulching paper cutting part (700) configured to cut the mulching paper, on which mulching has been completed along a ridge, to raise an end of the cut mulching paper from the ground to a predetermined height, and then to fix the end; and
a mulching paper burying part (800) configured to bury the end of the mulching paper fixed by the mulching paper cutting part (700) in a predetermined depth from the ground by covering the end of the mulching paper with soil when the mulching is performed again along the ridge.

2. The direct seeding device of claim 1, wherein the rotavator part (200) comprises:
a power transmission means (201) installed on a side surface of the body frame (100) so as to transmit vertically downwards power input through an output shaft (102b) of the gear box (102); and
a rotor (202) including a plurality of blades (202b) installed on a rotary shaft (202a), which is rotated by power transmitted through the power transmission means (201), at a predetermined interval, the rotor (202) being configured to crush and cultivate soil of the ground and to scoop up and scatter some of the soil rearwards.

3. The direct seeding device of claim 1, wherein the leveling part (300) comprises:
connection pieces (301) rotatably installed on opposite side walls (103) of the body frame (100), respectively; and
a leveling roller (302) rotatably installed between the connection pieces (301), the leveling roller (302) being configured to compact and level the ground cultivated by the rotavator part (200) by pressing the ground by a weight thereof.

4. The direct seeding device of claim 1, wherein the spreading part (400) comprises:
a plurality of support rollers (401) installed in lower portions of perforated portions (103a) formed in the opposite side walls (103) of the body frame (100);
a support shaft (402) installed in a transverse direction to penetrate the opposite side walls (103) of the body frame (100);
roll anchoring bodies (403), first ends of which are coupled to the ends of the support shaft (402) outside the side walls (103) to be pivotable by a predetermined angle, and second ends of which are provided with pivot mounting parts (403a) configured to support a winding pipe of the mulching roll;
a mulching roller (404) coupled to pivot pieces pivotally installed on the opposite side walls (103) of the body frame (100), the mulching roller (404) being configured to pressing the mulching paper unwound from the mulching roll (A) supported by the roll anchoring bodies (403) such that the unwound mulching paper is brought into close contact with the ground; and
a height indication rod (407) having a lower end coupled to one end of each of the pivot pieces (405) by a pin and an upper end configured to indicate a height of the ground over which mulching is performed by the mulching roller (404) on an indication part (406) installed on an upper portion of each of the side walls of the body frame 100.

5. The direct seeding device of claim 1, wherein the roll-unwinding-prevention part (500) comprises:
a transverse rod (501) installed between the opposite side walls (103) of the body frame (100);
roll pressing rods (502) formed to protrude at a predetermined interval from the transverse rod (501) so as to circumscribe the mulching roll (A) supported by the spreading part (400) to prevent the mulching roll (A) from being inadvertently unwound; and
dampers (503) installed between opposite ends of the transverse rod (501) and the leveling part (300) so as to cause the roll pressing rods (502) to circumscribe the mulching roll A with a predetermined pressure.

6. The direct seeding device of claim 1, wherein the soil covering part (600) comprises:
a plurality of feed chutes (601) provided in a width direction of the main body frame (100) above the spreading part (400) so as to load soil scooped up by the rotavator part (200) thereon; and
a feed screw (602) installed inside the feed chutes (601) and driven by a motor provided in the body frame (100) so as to feed the soil loaded on the feed chutes (601) such that the soil is discharged to a rear side of the mulching roller (404).

7. The direct seeding device of claim 1, wherein the mulching paper cutting part (700) comprises:
first and second cylinders (701, 702) vertically installed at a rear upper portion of the body frame (100) so as to be operated by hydraulic pressure supplied from the tractor;
a lifting cutting blade (703) vertically raised and lowered by the first cylinder (701) so as to press and cut the mulching paper spread over the ground in the width direction; and
a rotary cutting blade (705) rotated by the second cylinder (702) to support cutting of the mulching paper pressed and cut by the lifting cutting blade (703) and to lift up an end of the cut mulching paper such that the end of the cut mulching paper is fixedly brought into close contact with a bottom surface of a mulching paper fixing part (704).

8. The direct seeding device of claim 1, wherein the mulching paper burying part (800) comprises:
a third cylinder (801) vertically installed at a rear upper portion of the body frame (100) so as to be operated by hydraulic pressure supplied from the tractor;
a burying piece (802) vertically raised and lowered by the third cylinder (801) to press an end of the mulching paper fixed after by the mulching paper cutting part (700) in a widthwise and to bury the end of the mulching paper at a predetermined depth from the ground;
a covering soil storage box (803) rotatably installed behind the soil covering part (600) and configured to store some of the soil discharged from the soil covering part (600) and to spread the stored soil on the mulching paper when the end of the mulching paper is buried in the ground by the burying piece (802) such that the mulching paper is fixed to the ground; and
a link device (804) installed behind the body frame (100) and configured to be interlocked with the mulching paper cutting part (700) so as to cause the end of the mulching paper fixed to the mulching paper cutting part (700) to be separated from the mulching paper cutting part (700) and to rotate the covering soil storage box (803) such that the soil contained in the covering soil storage box (803) is discharged.

9. The direct seeding device of claim 8, wherein the link device (804) comprises:
a rotary plate (804a) installed behind the body frame (100) and configured to be interlocked with the mulching paper cutting part (700) so as to cause the end of the mulching paper fixed to the mulching paper cutting part (700) to be separated from the mulching paper cutting part (700), the rotary plate (804a) being installed to the body frame (100) to be rotatable by a predetermined angle so as to rotate the covering soil storage box (803) and to be returned to an original position thereof by a coil spring (804b);
a first link piece (804c) having a first end pin-coupled to the rotary plate (804a) and a second end pin-coupled to a side face of the lifting cutting blade (703) ;
a second link piece (804d) having a first end pin-coupled to the rotary plate (804a) and a second end pin-coupled to the mulching paper fixing part (704);
a third link piece (804e) having a first end pin-coupled to the rotary plate (804a) and a second end pin-coupled to the burying piece (802); and
a fourth link piece (804f) having a first end pin-coupled to the burying piece (802) and a second end pin-coupled to the covering soil storage box (803),
wherein a long hole is formed at upper ends of the first link piece (804c) and the third link piece (804e) pin-coupled to the rotary plate (804a) so as to pin-couple the first link piece (804c) and the third link piece (804e) to the rotary plate (804a) using the long hole, whereby the first link piece (804c) and the third link piece (804e) are not interlocked with each other by the rotary plate (804a).
